# EUROPÄISCHE PATENTSCHRIFT

(11) **EP 2 496 456 B1**
(45) Veröffentlichungstag und Bekanntmachung des Hinweises auf die Patenterteilung: **10.07.2013**
(21) Anmeldenummer: 10771453.7
(22) Anmeldetag: 29.10.2010
(51) Int. Cl.: B60W 10/02, B60W 10/08, B60W 20/00, B60W 30/18, B60K 6/48

(54) **VERFAHREN ZUM ANSTEUERN EINES ANFAHRVORGANGES**
METHOD FOR ACTUATING A STARTING PROCESS
PROCÉDÉ DE COMMANDE D'UN PROCESSUS DE DÉMARRAGE

(30) Priorität: 04.11.2009 DE 102009046367
(43) Veröffentlichungstag der Anmeldung: 12.09.2012
(73) Patentinhaber: ZF Friedrichshafen AG, 88038 Friedrichshafen (DE)
(72) Erfinder: BORNTRAEGER, Kai, 88085 Langenargen (DE); KALTENBACH, Johannes, 88048 Friedrichshafen (DE)
(86) Internationale Anmeldenummer: PCT/EP2010/066427
(87) Internationale Veröffentlichungsnummer: WO 2011/054744

(56) Entgegenhaltungen:
- DE-A1- 10 221 835
- DE-A1- 19 733 465
- DE-A1-102004 043 587
- GB-A- 2 452 136
- US-A1- 2007 168 103
- US-A1- 2009 093 337

## Beschreibung

Die vorliegende Erfindung betrifft ein Verfahren zum Ansteuern eines Anfahrvorganges bei einem Fahrzeug gemäß der im Oberbegriff des Patentanspruches 1 näher definierten Art.

Aus der Fahrzeugtechnik sind Fahrzeuge mit einem Hybridantrieb und mit hydraulischer Getriebesteuerung bekannt. In derartigen Antriebsträngen ist üblicherweise eine Primärpumpe des Getriebes zur Druckmittelversorgung vorgesehen. Wenn jedoch bei abgeschaltetem Verbrennungsmotor ein rein elektrischer Antrieb vorgesehen wird, kann die Primärpumpe zu Beginn nicht den erforderlichen Druck aufbauen, da die elektrische Maschine aus dem Stand ein Anfahren mit maximalem Drehmoment ermöglicht. Deshalb ist es bekannt, dass eine elektrische Zusatzpumpe verwendet wird, die den für die Drehmomentübertragung erforderlichen Druck an den Schaltelementen zur Verfügung stellt.

Bei Anfahrvorgängen zum Beispiel an einer Steigung kann es zum Zurückrollen des Fahrzeuges kommen. Beim Zurückrollen jedoch dreht auch die mit der Getriebeeingangswelle verbundene Primärpumpe in die entgegengesetzte Richtung und fördert somit Druckmittel aus der Getriebesteuerung zurück in den Druckmittelsumpf. In diesem Zustand kann auch die elektrische Zusatzpumpe nicht mehr genügend Öl einspeisen, da die Rückfördermenge der Primärpumpe zu hoch ist. Demzufolge bricht der Systemdruck in der Getriebesteuerung zusammen und die Schaltelemente können das Drehmoment nicht mehr übertragen und geraten in eine Schlupfphase. Durch diesen unkontrollierten Schlupfbetrieb erhöht sich die Schaltelernentbelastung und es treten Schwingungen im Antriebsstrang sowie ein unerwünschtes Ruckeln am Fahrzeug auf.

Bei Hybridfahrzeugen kann einem Zurückrollen des Fahrzeuges mithilfe der elektrischen Maschine entgegengewirkt werden. Jedoch ist hierbei zu beachten, dass im Stillstand bei Synchronmaschinen das Drehfeld steht und somit die Leistungselektronik eine hohe Strombelastung erfährt. Bei Asynchronmaschinen tritt dieser Effekt zwar etwas reduziert auf, da sich auch im Stillstand durch den Schlupf ein Drehfeld ausbildet. Somit unterliegt diese elektrische Zurückrollverhinderung mit maximalem Drehmoment einer zeitlich erheblichen Begrenzung. Ebenso ist die Nutzung des Kurzschlussmoments bei sehr niedrigen Drehzahlen kritisch, da dieses schlagartig abfallen kann und das Fahrzeug dann ungebremst zurückholt.

US 2009/0093337A1 und GB 2 452 136 A1 zeigen Fahrzeuge mit Hybridantrieb und die Problematik des Rollens der Fahrzeuge in eine unerwünschte Richtung. Die Fahrzeuge werden entweder von Elektromotoren oder mittels des Verbrennungsmotors gehalten.

Der vorliegenden Erfindung liegt die Aufgabe zu Grunde, ein Verfahren der eingangs genannten Gattung vorzuschlagen, welches beim Anfahren ein Bewegen eines Fahrzeuges in eine unerwünschte Fahrrichtung sicher verhindert.

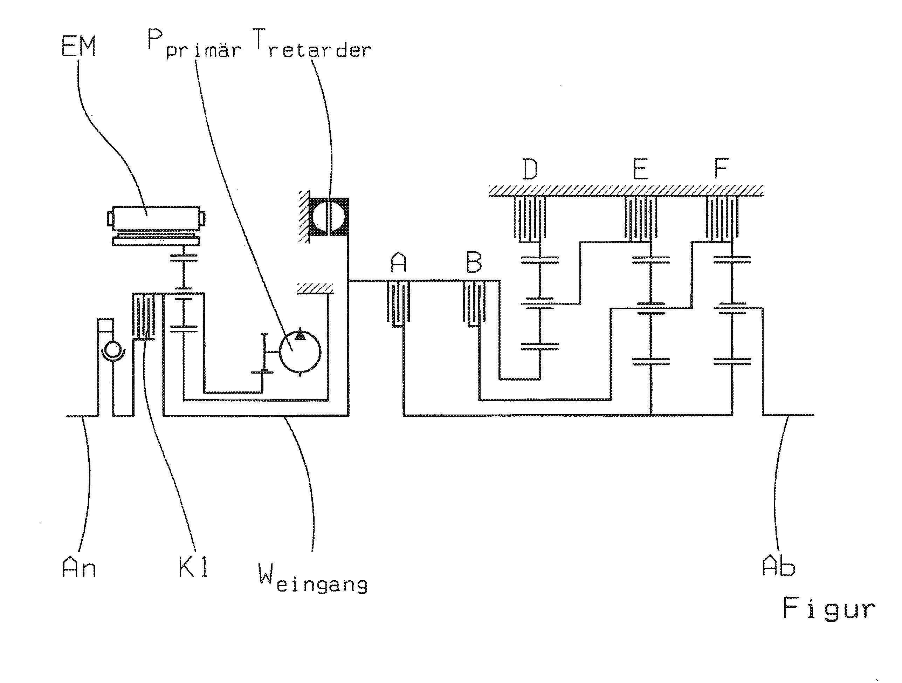

Diese Aufgabe wird erfindungsgemäß durch die Merkmale des Patentanspruches 1 gelöst, wobei weitere vorteilhafte Ausgestaltungen den Unteransprüchen und der Zeichnung zu entnehmen sind.

Demnach wird ein Verfahren zum Ansteuern eines Anfahrvorganges bei einem Fahrzeug mit einem Hybridantrieb und einem hydraulisch angesteuerten Getriebe in eine gewählte Fahrrichtung vorgeschlagen, wobei zunächst beim Anfahren überprüft wird, ob das Fahrzeug in die gewählte Richtung bewegt wird und wobei, wenn das Fahrzeug in die entgegengesetzte Richtung bewegt wird, zumindest ein an dem geschalteten Gang beteiligtes Schaltelement des Getriebes derart angesteuert wird, dass mit der elektrischen Maschine ein kontinuierlicher Drehmomentaufbau realisiert wird.

Somit wird mit dem Verfahren eine Funktion zur Rückrollabsicherung bei einem Hybridantrieb mit einer hydraulischen Steuerung des Getriebes realisiert, so dass beim Anfahren z.B. an Steigungen ein Bewegen des Fahrzeuges in eine unerwünschte Fahrrichtung durch einen kontinuierlichen Drehmomentaufbau verhindert wird. Dadurch wird verhindert, dass sich die Konstantpumpe beziehungsweise die Primärpumpe in eine unerwünschte Richtung dreht und Druckmittel zurück in den Druckmittelsumpf gefördert. Somit verhält sich das Fahrzeug durch das erfindungsgemäße Verfahren in diesen vorgeschriebenen Situationen wie ein konventionelles Fahrzeug mit zum Beispiel mit einem Wandlerautomat.

Um zu erkennen, ob sich das Fahrzeug in die gewünschte Richtung bewegt, können bei dem Verfahren vorzugsweise Signale von zumindest einem der nachfolgenden Sensoren beziehungsweise Drehzahlsensoren, wie zum Beispiel einem ABS-Sensor, einem Abtriebsensor, einem Rotorlagesensor der elektrischen Maschine oder einem Turbinen- beziehungsweise Abtriebsdrehzahlgeber oder dergleichen, verwendet werden.

Gemäß der Erfindung kann vorgesehen sein, dass zumindest bei einem der beteiligten Schaltelemente ein vorbestimmtes Schlupfmoment beziehungsweise Rutschmoment eingestellt wird, wobei der Betrag des Schlupfmomentes kleiner als das maximal mögliche Drehmoment der elektrische Maschine gewählt wird. Sobald das gezielte Schlupfmoment eingestellt ist, wird die elektrische Maschine in den Drehzahlenmodus umgeschaltet, in dem die elektrische Maschine das Drehmoment derart regelt, dass eine eingestellte Drehzahlvorgabe angesteuert wird.

Im Rahmen einer nächsten Ausgestaltung der Erfindung kann bei dem Verfahren vorgesehen sein, dass im Rahmen des Drehzahlmodus ein Drehmoment an der elektrischen Maschine eingestellt wird, das zum Beispiel größer gleich dem eingestellten Schlupfmoment an den zur Schaltung des eingelegten Ganges beteiligten Schaltelementen ist. Dadurch rutscht das beziehungsweise rutschen die Schaltelemente durch und die elektrische Maschine erreicht die Zieldrehzahl. Am Schaltelement entsteht eine entsprechende Relativdrehzahl. Auf diese Weise wird sichergestellt, dass die Getriebeeingangswellendrehzahl durch die Drehzahlvorgabe an der elektrischen Maschine in Übereinstimmung mit der gewünschten Fahrrichtung bewegt wird, so dass die Primärpumpe das erforderliche Druckmittel beziehungsweise das Öl in die richtige Richtung fördert, um die Druckmittelversorgung in dem Getriebesystem sicherzustellen.

Vorzugsweise kann der durch die Primärpumpe und vorzugsweise durch eine elektrische Zusatzpumpe aufgebrachte Volumenstrom zur Kühlung und Schmierung der Schaltelemente verwendet werden. Über die Drehzahlvorgabe an der elektrischen Maschine kann zudem die Fördermenge der Primärpumpe eingestellt werden.

Das erfindungsgemäß vorgeschlagene Verfahren kann vorzugsweise bei einem Parallelhybridantrieb, wie zum Beispiel bei dem ECOLIFE-Hybrid der Anmelderin eingesetzt werden. Vorzugsweise kann das Verfahren somit bei einem Fahrzeug mit einer parallel zum Verbrennungsmotor am Antriebsstrang angeordneten elektrischen Maschine, zumindest einer Primärpumpe und einem Primärretarder sowie mit einem dreistufigen Planetenradsatzgetriebe mit fünf Schaltelementen eingesetzt werden. Es sind jedoch auch andere Einsatzbereiche denkbar.

Nachfolgend wird die vorliegende Erfindung weiter anhand der Zeichnung erläutert. Die einzige Figur der Erfindung zeigt beispielhaft einen Parallelhybridantrieb für ein Fahrzeug, bei dem das erfindungsgemäß vorgeschlagene Verfahren vorzugsweise angewendet werden kann.

Der exemplarisch dargestellte Antriebsstrang zeigt einen Parallelhybridantrieb eines Fahrzeuges mit einer über eine Kupplung K1 an die Getriebeeingangswelle W_{eingang} angekuppelte Antriebswelle An, welche von einem Verbrennungsmotor angetrieben wird. Parallel zum Verbrennungsmotor ist eine elektrische Maschine 3 im Antriebsstrang angeordnet, wobei die elektrische Maschine EM mit der Getriebeeingangswelle W_{eingang} verbunden ist. Zur Druckmittelversorgung beziehungsweise zur Ölversorgung ist eine Primärpumpe P_{primär} ebenfalls mit der Getriebeeingangswelle W_{eingang} verbunden.

Als Getriebe ist ein dreistufiges Planetenradsatzgetriebe mit zumindest sechs Vorwärtsgängen 1, 2, 3, 4, 5, 6 und einem Rückwärtsgang R schematisch angedeutet. Um die Gänge 1, 2, 3, 4, 5, 6, R bei dem Getriebe schalten zu können, sind fünf Schaltelemente A, B, D, E, F vorgesehen, wobei als Schaltelemente A, B, D, E, F Lamellenkupplungen beziehungsweise Lamellenbremsen beispielhaft angedeutet sind. Zum Realisieren der jeweiligen Gänge 1, 2, 3, 4, 5, 6, R ist es erforderlich, dass jeweils zwei Schaltelemente A, B, D, E, F betätigt werden. Die jeweils für einen gewählten Gang 1, 2, 3, 4, 5, 6, R beteiligten Schaltelemente A, B, D, E, F sind durch die Angabe des jeweiligen Ganges 1, 2, 3, 4, 5, 6, R an jedem Schaltelement A, B, D, E, F angedeutet. Beispielsweise zum Schalten des ersten Ganges 1 sind die Schaltelemente A und F zu betätigen. Zum Schalten des Rückwärtsganges R sind dagegen die Schaltelemente E und F zu aktivieren. Zur Drehmomentübertragung zwischen Antriebswelle An und Abtriebswelle Ab ist ein Primärretarder T_{retarder} an der Getriebeeingangswelle W_{eingang} vorgesehen.

Erfindungsgemäß ist vorgesehen, dass das Verfahren zum Ansteuern eines Anfahrvorganges in eine gewählte Fahrrichtung beim Anfahren zunächst überprüft, ob das Fahrzeug in die gewählte Richtung bewegt wird. Wenn das Fahrzeug nicht in die gewählte Richtung bewegt wird, werden an den zum Schalten des eingelegten Ganges 1, 2, 3, 4, 5, 6, R beteiligten Schaltelementen A, B, D, E, F, zum Beispiel beim ersten Vorwärtsgang 1 an den Schaltelementen A und F, ein gezielte Schlupfmoment eingestellt, dass vom Betrag kleiner ist als das maximal mögliche Drehmoment der elektrischen Maschine EM. Die elektrische Maschine EM wird dann in den Drehzahlenmodus geschaltet, wobei im Rahmen des Drehzahlenmodus eine gewünschte Drehzahlvorgabe an der elektrischen Maschine EM eingestellt wird, die größer gleich dem Schlupfmoment an den Schaltelementen A und F ist. Wenn das erfindungsgemäße Verfahren beim Anfahren im Rückwärtsgang R angewendet wird, kann das gezielte Rutschmoment beispielsweise an den Schaltelementen D und F eingestellt werden. Analog kann das Verfahren auch bei den anderen Gängen 2, 3, 4, 5, 6 angewendet werden.

Durch das eingestellte Schlupfmoment und durch die Drehzahlvorgabe bei der elektrischen Maschine EM rutschen die entsprechenden Schaltelemente A, B, D, E, F zum Beispiel beim ersten Vorwärtsgang 1 die Schaltelemente A und F durch und die elektrische Maschine EM erreicht ihre Zieldrehzahl. Dadurch entsteht an dem Schaltelementen A und F eine entsprechende Relativdrehzahl, die sicherstellt, dass die Getriebeeingangswelle W_{eingang} durch die Drehzahlvorgabe an der elektrischen Maschine EM in die richtige Richtung bewegt wird, so dass die Primärpumpe P_{primär} eine ausreichende Druckmittel- beziehungsweise Ölversorgung sicherstellt.

**Bezugszeichen**

| | |
|---|---|
| An | Antriebswelle |
| w_{eingang} | Getriebeeingangswelle |
| EM | elektrische Maschine |
| P_{primär} | Primärpumpe |
| T_{retarder} | Primärretarder |
| Ab | Abtriebswelle |
| A | Schaltelement |
| B | Schaltelement |
| D | Schaltelement |
| E | Schaltelement |
| F | Schaltelement |
| K1 | Kupplung |
| 1 | erster Vorwärtsgang |
| 2 | zweiter Vorwärtsgang |
| 3 | dritter Vorwärtsgang |
| 4 | vierter Vorwärtsgang |
| 5 | fünfter Vorwärtsgang |
| 6 | sechster Vorwärtsgang |
| R | Rückwärtsgang |

## Patentansprüche

1. Verfahren zum Ansteuern eines Anfahrvorganges bei einem Fahrzeug mit einem Hybridantrieb und einem hydraulisch angesteuerten Getriebe in eine gewählte Fahrrichtung, **dadurch gekennzeichnet, dass** beim Anfahren überprüft wird, ob das Fahrzeug in die gewählte Richtung bewegt wird, und dass, wenn das Fahrzeug in die entgegengesetzte Richtung bewegt wird, zumindest das an dem geschalteten Gang (1, 2, 3, 4, 5, 6, R) beteiligte Schaltelement (A, B, D, E, F) des Getriebes derart angesteuert wird, dass mit der elektrischen Maschine (EM) ein kontinuierlicher Drehmomentaufbau realisiert wird.

2. Verfahren nach Anspruch 1, **dadurch gekennzeichnet, dass** zumindest bei einem der beteiligten Schaltelemente (A, B, D, E, F) ein vorbestimmtes Schlupfmoment eingestellt wird, wobei der Betrag des Schlupfmomentes kleiner als das maximal mögliche Drehmoment der elektrischen Maschine (EM) gewählt wird.

3. Verfahren nach Anspruch 2, **dadurch gekennzeichnet, dass** nach dem Einstellen eines gezielten Schlupfmomentes die elektrische Maschine (EM) in einen Drehzahlmodus umgeschaltet wird.

4. Verfahren nach Anspruch 3, **dadurch gekennzeichnet, dass** mit der elektrischen Maschine (EM) im Drehzahlmodus ein Drehmoment aufgebaut wird, welches größer gleich dem eingestellten Schlupfmoment an den bei der Schaltung des jeweiligen Ganges (1, 2, 3, 4, 5, 6, R) beteiligten Schaltelementen (A, B, D, E, F) ist.

5. Verfahren nach einem der vorangehenden Ansprüche, **dadurch gekennzeichnet, dass** der durch die Primärpumpe (P_{primär}) und/oder durch eine elektrische Zusatzpumpe aufgebrachte Volumenstrom zur Kühlung und Schmierung der Schaltelemente (A, B, D, E, F) verwendet wird.

6. Verfahren nach einem der vorangehenden Ansprüche, **dadurch gekennzeichnet, dass** über die Drehzahlvorgabe an der elektrischen Maschine (EM) die Fördermenge der Primärpumpe (P_{primär}) eingestellt wird.

7. Verfahren nach einem der vorangehenden Ansprüche, **dadurch gekennzeichnet, dass** es bei einem Fahrzeug mit einem Parallelhybridantrieb und einem Primärretarder (T_{retarder}) sowie mit einem dreistufigen Planetenradsatzgetriebe mit fünf Schaltelementen (A, B, D, E, F) verwendet wird.

## Claims

1. Method for actuating a starting process in the case of a vehicle with a hybrid drive and a hydraulically actuated transmission in a selected driving direction, **characterized in that** a check is carried out during starting as to whether the vehicle is moved in the selected direction and that, if the vehicle is moved in the opposite direction, at least the shift element (A, B, D, E, F) of the transmission involved in the shifted gear (1, 2, 3, 4, 5, 6, R) is actuated in such a manner that a continuous build-up of torque is produced with the electric machine (EM).

2. Method according to Claim 1, **characterized in that** a predetermined slip torque is set at least in the case of the shift elements (A, B, D, E, F) involved, wherein the magnitude of the slip torque is selected to be smaller than the maximum potential torque of the electric machine (EM).

3. Method according to Claim 2, **characterized in that**, after the setting of a targeted slip torque, the electric machine (EM) is switched into a rotational speed mode.

4. Method according to Claim 3, **characterized in that** a torque, which is greater than or equal to the set slip torque at the shift elements (A, B, D, E, F) involved in the shifting of the respective gear (1, 2, 3, 4, 5, 6, R), is built up with the electric machine (EM) in the rotational speed mode.

5. Method according to one of the preceding claims, **characterized in that** the volumetric flow brought about by the primary pump (P_{primary}) and/or by an electric additional pump is used for cooling and lubricating the shift elements (A, B, D, E, F).

6. Method according to one of the preceding claims, **characterized in that** the conveying quantity of the primary pump (P_{primary}) is set via the rotational speed definition at the electric machine (EM).

7. Method according to one of the preceding claims, **characterized in that** it is used in the case of a vehicle with a parallel hybrid drive and a primary retarder (T_{retarder}) and with a three-stage planetary wheel set transmission with five shift elements (A, B, D, E, F).

## Revendications

1. Procédé de commande d'une opération de démarrage dans un véhicule comprenant un entraînement hybride et une boîte de vitesses à commande hydraulique dans une direction de conduite sélectionnée, **caractérisé en ce que** lors du démarrage, on vérifie si le véhicule est déplacé dans la direction sélectionnée, et **en ce que**, lorsque le véhicule est déplacé dans la direction opposée, au moins l'élément de commutation (A, B, D, E, F) de la boîte de vitesses participant au rapport enclenché (1, 2, 3, 4, 5, 6, R) est commandé de telle sorte qu'une augmentation de couple continue soit réalisée avec le moteur électrique (EM).

2. Procédé selon la revendication 1, **caractérisé en ce qu'**au moins dans le cas d'un des éléments de commutation (A, B, D, E, F) participant, un couple de glissement prédéterminé est ajusté, la valeur du couple de glissement étant choisie plus petite que le couple maximal possible du moteur électrique (EM).

3. Procédé selon la revendication 2, **caractérisé en ce qu'**après l'ajustement d'un couple de glissement ciblé, le moteur électrique (EM) est commuté dans un mode régime.

4. Procédé selon la revendication 3, **caractérisé en ce qu'**un couple est augmenté avec le moteur électrique (EM) dans le mode régime, lequel couple est supérieur ou égal au couple de glissement ajusté au niveau des éléments de commutation (A, B, D, E, F) participant lors de la commutation du rapport respectif (1, 2, 3, 4, 5, 6, R).

5. Procédé selon l'une quelconque des revendications précédentes, **caractérisé en ce que** le débit volumique appliqué par la pompe primaire (P_{primär}) et/ou par une pompe supplémentaire électrique est utilisé pour le refroidissement et la lubrification des éléments de commutation (A, B, D, E, F).

6. Procédé selon l'une quelconque des revendications précédentes, **caractérisé en ce que** la quantité refoulée de la pompe primaire (P_{primär}) est ajustée par le biais de l'établissement préalable du régime au niveau du moteur électrique (EM).

7. Procédé selon l'une quelconque des revendications précédentes, **caractérisé en ce qu'**il est utilisé dans le cas d'un véhicule avec un entraînement hybride parallèle et un ralentisseur primaire (T_{retarder}) ainsi qu'avec une boîte de vitesses à train épicycloïdal à trois étages, avec cinq éléments de commutation (A, B, D, E, F).
